# EUROPEAN PATENT SPECIFICATION

(11) **EP 1 634 353 B1**
(45) Date of publication and mention of the grant of the patent: **17.09.2008**
(21) Application number: 04730584.2
(22) Date of filing: 30.04.2004
(51) Int. Cl.: H02G 1/02

(54) **POWER LINE INSPECTION VEHICLE**
INSPEKTIONSFAHRZEUG FÜR FREILEITUNGEN
VEHICULE D'INSPECTION DE LIGNES ELECTRIQUES

(30) Priority: 15.05.2003 GB 0311138
(43) Date of publication of application: 15.03.2006
(73) Proprietor: University Of Wales, Bangor, Wales LL57 2DG (GB)
(72) Inventor: JONES, David, Iuean, Caernarfon, Gwynedd LL55 3PG (GB)
(74) Representative: Brandon, Paul Laurence
(86) International application number: PCT/GB2004/001874
(87) International publication number: WO 2004/102757

(56) References cited:
- DE-U- 29 714 584
- FR-A- 2 731 194
- US-A- 4 818 990
- US-A1- 2001 015 149

## Description

### Field of the Invention

This invention relates to power lines inspection apparatus and to methods of inspecting power lines.

### Background to the Invention

In many countries, there are extensive networks of kilometres of electricity power lines, suspended overhead in between electricity pylons and the like.

Periodic inspection of each and every power line is necessary in order to ensure that the power lines function correctly and to limit the danger that a power line may break or snap.

In many cases, frequent inspections of power lines is needed, especially after strong weather such as high winds or electrical storms, and the data revealed needs to be of a high quality in order to detect even minor defects in the power lines.

Various attempts have been made to produce an inspection robot, which travels on wheels, rollers or tracks and which is supported by the overhead power lines. Examples of wheeled inspection robots are the EPRI Tomcat (RTM), the Robhot (RTM) for inspecting joints in transmission lines and the Tepco (RTM) robot.

Wheeled robots are adequate for inspecting stretches of power lines between pylons, but have the disadvantage that in order for the robot to traverse any obstacles in the power line path, the robot must effect some sort of movement around or over the obstacle. For example, on pylons, in-line insulators may protrude upwardly and to the side of each electricity power line. Also spur lines may extend at right angles from the pylons onto which the inspection robots may need to drop.

Attempts that have been made include apparatus to traverse obstacles in the path of the power lines, but each of these still relies in some manner on wheel traction to roll the robot along the lines. The Tepco (RTM) robot attempts to traverse obstacles by means of a foldaway guiderail, which lifts the robot over the obstacle. The Robhot (RTM) traverses obstacles by means of a manned helicopter, which lifts it from one area of power line to another over or around an obstacle. The more autonomous EPRI (RTM) and Tepco (RTM) robots employ elaborate mechanical linkages to bypass pylons and obstacles which linkages have not entirely overcome the problem, and tend to increase construction costs, and maintenance costs, and time.

On the other hand, flying inspection robots have also been developed which are independent of such obstacles on the power lines and have the potential to avoid unexpected obstacles, such as tree branches overhanging onto the line which can be a common occurrence and are a major cause of defects in power lines during storms.

Apparatus originally proposed for this role include the Sprite (RTM) which like the majority of other rotor powered vehicles is a remotely piloted vehicle (RPV) piloted via radio link and powered by its own internal 5KW piston engines.

A key problem in employing remotely piloted rotor powered vehicles, which are arranged to hover and move remote from the power lines is the need to satisfy the "see and avoid" principle for aircraft in unmanaged air space. In many countries there are regulations determining size of a vehicle above which the vehicle becomes an aircraft, or which determines an altitude above which a vehicle flying becomes an aircraft. In the United Kingdom, the Civil Aviation Authority (CAA) rules determine that an air vehicle weighing less than 20 kilograms is a "small" aircraft. An aircraft weighing more than 20 kilograms must comply with the Air Navigation Order (ANO), which includes holding a certificate of airworthiness and obeying the rules of the air. Even if an aircraft weighs less than 20 kilograms, it would not be allowed to fly for aerial work (commercial) purposes other than under the terms of permission issued by the Civil Aviation Authority. In order to be granted permission, it is normally necessary for a remotely piloted vehicle to have checks which do not allow it to fly beyond visual range of the operator, normally deemed to be a distance not exceeding 1500 metres. For a power line inspection to be commercially viable, it may be necessary to have a range of operation of 10 - 15 kilometres from the operator.

Furthermore, there are rules in many countries as to the altitude to which a vehicle may climb before it is considered a hazard to other air traffic.

Attempts to overcome these difficulties included the provision of rotor powered line inspection apparatus, which include their own power source and are able to traverse power lines on or in the region of the power lines in order to inspect them. These rotor powered inspection robots include a tether line which may be used in conjunction with increased rotor power to lift the robot off the power lines in order to traverse obstacles, but prevent the robot from attaining too high an altitude. Examples of known robots are the Moller Airobots. Problems with such vehicles include a limited operational span due to the finite power source on board the vehicle and the need to remove the inspection robot each time the power source needs to be regenerated or replaced. Furthermore, due to the imposition of a tether line, a operator needs to be reasonably close to the vehicle in order to control the vehicle direction and altitude, and this falls far short of enabling the 10 - 15 kilometres remote operation needed for a commercially viable inspection vehicle.

DE-U-29714584 discloses a power line inspection apparatus according to the pre-characterising portion of claim 1.

US-A-4818990 discloses a power line inspection apparatus according to the pre-charactering portion of claim 1.

US-A-2001/0015149 discloses a power line inspection apparatus suspended from a power line and running from an internal power source.

FR-A-2731194 discloses an electricity supply device for an aerial cable car which supplies electric energy through supporting cables. Wheels of the cable car run on the wires and a separate wheel under each wire. Power is drawn from each of the wheels in contact with the wire.

It would therefore be advantageous to be able to provide a power line inspection apparatus which could traverse power lines on or in the vicinity of power lines, and in which the apparatus may draw power from the lines themselves such that the operation range of the apparatus is not limited by any particular power source.

It would be further advantageous to provide a power line apparatus which could traverse obstacles in the path of the apparatus whilst being limited to a particular parameter such as altitude, range and the like in order to comply with aviation regulations in a particular location. It would be advantageous to provide a power line inspection apparatus in which a power source within the apparatus can be continually re-charged such that the apparatus may use a power source when remote from power lines, and upon contacting said power lines a subsequent time re-charge the power source to replenish the power that had been used for remote locomotion.

It would be advantageous to provide a power line inspection apparatus which does not include a tether line and which does not rely solely on locomotion remote from power lines in the form of an aircraft or helicopter.

It is therefore an aim of preferred embodiments of the present invention to overcome or mitigate at least one problem of the prior art, whether expressly disclosed herein or not.

### Summary of the Invention

According to the present invention, there is provided a power line inspection apparatus comprising a vehicle body to which is mounted a power line traversal means, a power line inspection means and means to draw power from a power line to which it is attached, in use; wherein the means to draw power from the power line comprises an ohmic contact means; and wherein the apparatus further comprises remote travel means which comprises means able to effect hovering or flight of the apparatus above a power line.

Further features of the present invention are set out in the appended claims.

### Brief description of the drawings

For a better understanding of the invention and to show how the embodiments of the same may be put into effect the various aspects of the invention will now be described by way of example only in which:
Figure 1 illustrates a perspective view of a first embodiment of a power line inspection apparatus of the invention located on a three-phase power line;
Figure 2 illustrates a close up perspective view of a means to draw power from the power lines, of the apparatus of Figure 1;
Figure 2A illustrates a side close-up view of the means to draw power shown in Figure 2;
Figure 2B illustrates a front close-up view of the means to draw power shown in Figure 2
Figure 2C illustrates a side sectional view of the apparatus of Figure 1 in which the apparatus body has pitched forward;
Figure 2D illustrates a side sectional view of the apparatus of Figure 1 in which the apparatus body has lowered in height compared to that in Figure 2C;
Figure 3 illustrates part of a electricity pylon comprising a three-phase overhead power line from which a three-phase branch line extends towards the upper right corner of the Figure.
Figure 4 illustrates a block diagram of the power take-up system of the apparatus of Figure 1; and
Figure 5 illustrates a block diagram of a control system used in the apparatus of Figure 1.

### Description of the Preferred Embodiment

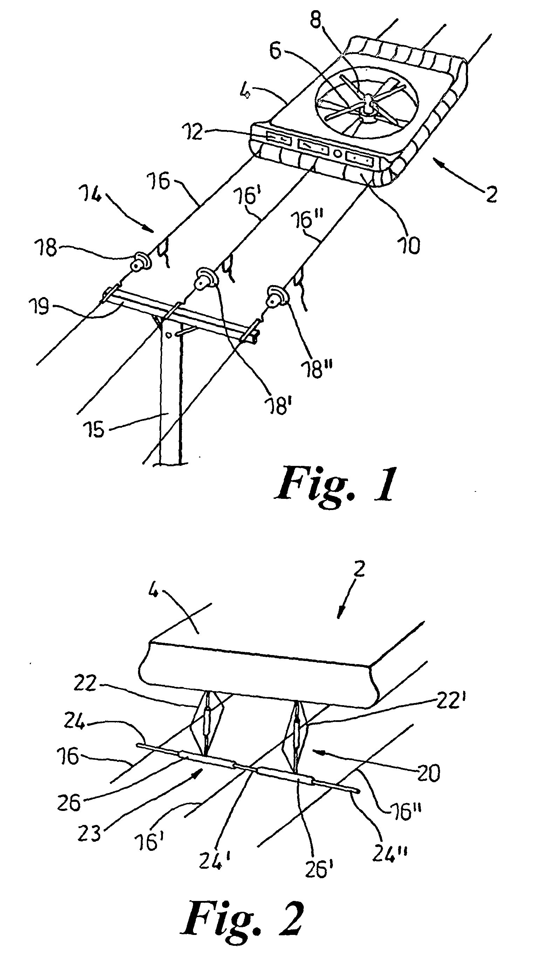

We refer firstly to Figure 1 which illustrates a perspective view of a power line inspection apparatus of the present invention. The power line inspection apparatus 2 comprises a apparatus body 4 comprising an aperture therethrough, housing a power line traversal means in the form of contra-rotating superposed rotors 6 and 8.

Beneath the apparatus body 4 is an insulating-skirt 10, arranged in use to be located above the power lines to be inspected. At the front of the apparatus body 4 is a bank of power line inspection means (which also function as a path obstacle sensor) comprising video surveillance cameras 12. The body 4 also includes power line inspection means at the rear of the body (not shown) such that the apparatus 2 may inspect power lines in forward and reverse movement modes. The surveillance cameras 12 are arranged at the front of the apparatus body 4 such that during locomotion of the apparatus 2 the surveillance cameras 12 view power lines in front of the apparatus 2. The rotors 6,8 also function as a remote travel means, able to affect hovering and flight of the apparatus 2 above the power lines when required.

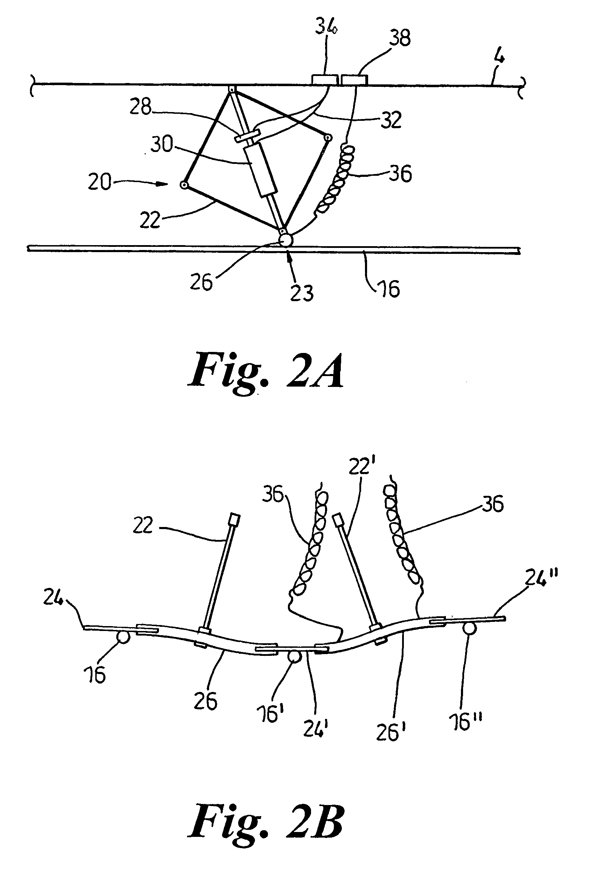

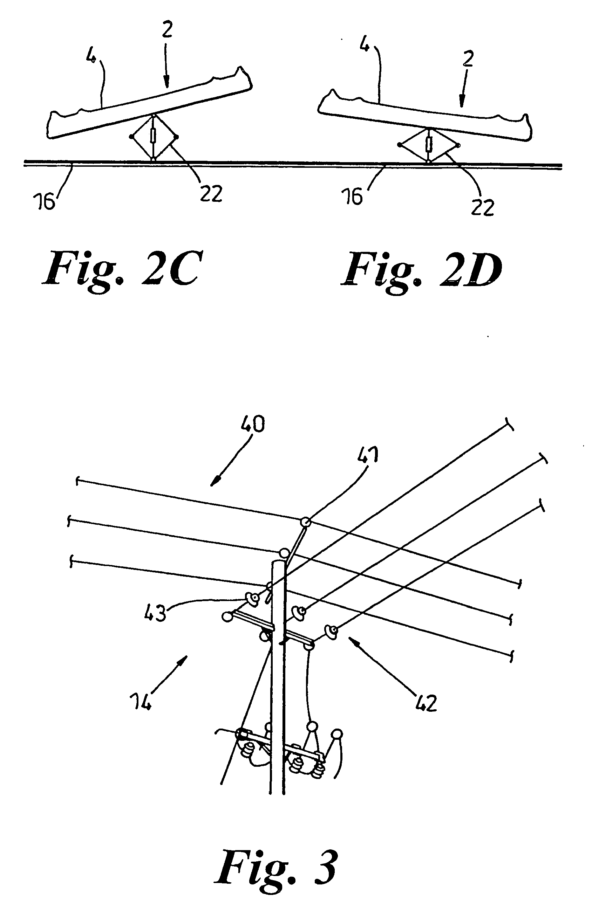

The apparatus further comprises means to draw power from the lines to which the apparatus 2 is attached in the form of an ohmic contact pantograph 20 as shown in Figures 2A and 2B. The pantograph 20 is located beneath the apparatus body 4 extending downwardly therefrom. The pantograph 20 is arranged in use to contact the or each power line to which the apparatus 2 is attached. The pantograph 20 of Figure 2 of the embodiment shown in Figure 1 comprises an ohmic contact bar comprising an elongated bar which includes two insulating areas 26, 26' separating three power uptake regions arranged 24, 24', 24'' to draw power from a three phase, three line electricity overhead cable. The pantograph 20 further includes movement-compensating means in the form of adjustable frames 22, 22' extending from the insulating portions 26, 26' of the contact bar 24, and connecting to the underside of the apparatus body 4. The frames 22, 22' are servo controlled. As shown in Figures 2A and 2B the pantograph frames 22, 22' include movement means in the form of a load cell 28 and linear actuator 30, connected to a digital controller 34 by way of control lines 32.

The contact bar 23 is connected to a transformer 38 by way of a high tension (HT) umbilical cord 36.

The apparatus 2 comprises within the body 4 a power storage means (not shown) in the form of rechargeable Avestor(RTM) lithium metal polymer battery which allows cessation of power take up from a power line in order that the apparatus may effect use of the remote travel means (rotors 6,8), by enabling power to be supplied to the rotors when power take up is switched off from the power lines 16, 16', 16''.

Use of the apparatus 2 shown in Figures 1,2 and 2A to 2D will now be described with reference to said Figures.

We refer firstly to Figure 1. Part of Figure 1 illustrates a three phase power line system 14 which includes three power lines 16, 16'and 16" extending spaced apart and parallel with each other. The power lines are suspended above the ground by a pylon 15 comprising a cross bar 19 extending perpendicular there from at the top of the pylon 15. The power lines 16, 16' and 16" traverse the cross bar 19 and are held up at the point of contact between the power lines and the cross bar 19. On one side of the power lines 16, 16'and 16" are insulators 18, 18' and 18'' in the form of substantially circular insulator members. The insulators 18, 18' and 18'' are obstacles over which an apparatus for inspecting power lines must pass in order to traverse the entire length of the power lines.

The power line inspection apparatus 2 shown in Figure 1 is lowered onto the power line system 14 via any suitable means such as under its own auxiliary battery power or via a transport heli-vehicle, which may be piloted or a remotely piloted heli-vehicle, or a jib-hoist on a ground vehicle, for example.

The apparatus 2 is lowered onto the power line system 14 such that the apparatus body 4 traverses all three power lines 16,16' and 16''. As shown in Figure 2, as the apparatus 2 is lowered onto the power lines 16, 16' and 16'', the pantograph 20 is arranged such that the ohmic contact bar 23 contacts each of the power lines 16, 16' and 16" at the conductive areas, and the insulating regions 26, 26' are located adjacent to the gaps between the power lines 16, 16' and 16''.

Once the apparatus 2 is located on the power line system 14, the means to draw power from the power line in the form of the pantograph 20 is actuated to draw power from the power lines 16, 16' and 16''. Power drawn into the apparatus 2 is used to power the rotors 6,8 which contrarotate to provide forward or reverse movement (depending of the angle of the rotor blades). The contra-rotating rotors 6 and 8 have the effect that reaction moment imported to the body is small, so that a tail rotor is not necessary. Directional and other control is achieved by varying the collective and cyclic pitch of the rotors 6 and 8. As the rotor 6, rotates the vehicle is moved forward along the power lines 16, 16' and 16''. The pantograph 20 ensures that power is continually drawn up to power the rotors such that movement is continuous along the power line system 14.

The adjustable frames 22, 22' are hinged so that the contact bar 23 can drag behind the apparatus 2 as shown, in Figure 2A. The correct contact force on the contact bar is maintained by measuring the force exerted by the shaft of the linear actuator 30 and extending or retracting it as necessary, in a feedback loop, to regulate against changing apparatus 2 height. A load cell 28 is used to measure the force and the linear actuator 30 of 200mm stroke, 25N thrust and maximum velocity 200mms⁻¹ is used to control linkage. Measurement and actuation signals are interfaced to the digital controller 34, located in the body 4, of the apparatus 2. Power is picked up from the overhead line 16, 16', 16" conductor by means of the insulated HT (high tension) umbilical 36.

The pick-up bar consists of three conductive sections 24, 24', 24" which lie on their respective lines 16, 16', 16" and feed power to the apparatus 2 through the HT umbilicals 36. The three sections 24, 24' 24'' are mechanically joined by compliant insulating sleeves 26, 26' so that downward pressure exerted by the pantograph 20 maintains good contact between each section 24, 24', 24'' and its power line 16, 16', 16'' despite small differences which may exist in the vertical spacing of the lines.

As the apparatus 2 moves forward along the power line system 14, the surveillance cameras 12 at the front of the apparatus body 4 continuously monitor the state of the power lines 16, 16' and 16'' in front of the apparatus 2 and transmit signals to a remote receiver for interpretation and dissemination by an operator.

The apparatus 2 continues to travel along the power lines 16, 16 and 16'' until an obstacle is detected in the path of the apparatus by the surveillance cameras 12 (which also function as a path obstacle sensor). In Figure 1, the power lines include insulators 18, 18' and 18'' which extend circumventially around the power lines 16,16' and 16''.

When the apparatus 2 travels adjacent to the insulators 18,18' and 18'', the surveillance cameras 12 detect the insulators and send signals to a remote operator (not shown). The remote operator can then instruct the apparatus 2 to cease drawing power from the power lines 16, 16' and 16" by retracting the pantograph from the power lines 16,16' and 16'' or by simply terminating actuation of the pantograph. During locomotion along the power lines 16, 16' and 16'', and drawing of power there from, the battery within the apparatus body 4 is charged. When power take-up is terminated, the battery may be effected to provide power to the rotors 6,8.

When power uptake is terminated by the pantograph 20, an operator may effect supply of power from the battery (not shown) to the rotors 6,8 and manipulate the angle of the rotors such that the rotors rotate at sufficient speed and angle to lift the apparatus 2 from the power supply system 14. Thus the battery and rotors 6, 8 combine to form a flight means.

Suitable batteries include lithium batteries, such as the Avestor(RTM) lithium metal polymer battery, supplied by Avestor, Quebec, Canada.

The operator may then remotely control the apparatus 2 to effect locomotion distant from but along the power lines 16, 16' and 16" in order to traverse the obstacles in the form of the insulators 18, 18' and 18''. When the apparatus 2 has passed the insulators, the operator may reduce the power supply from the battery and/or manipulate the angle of the rotors in order to reduce speed of the rotors and enable the apparatus 2 to descend onto the power lines 16,16' and 16'' after the insulators 18, 18' and 18''.

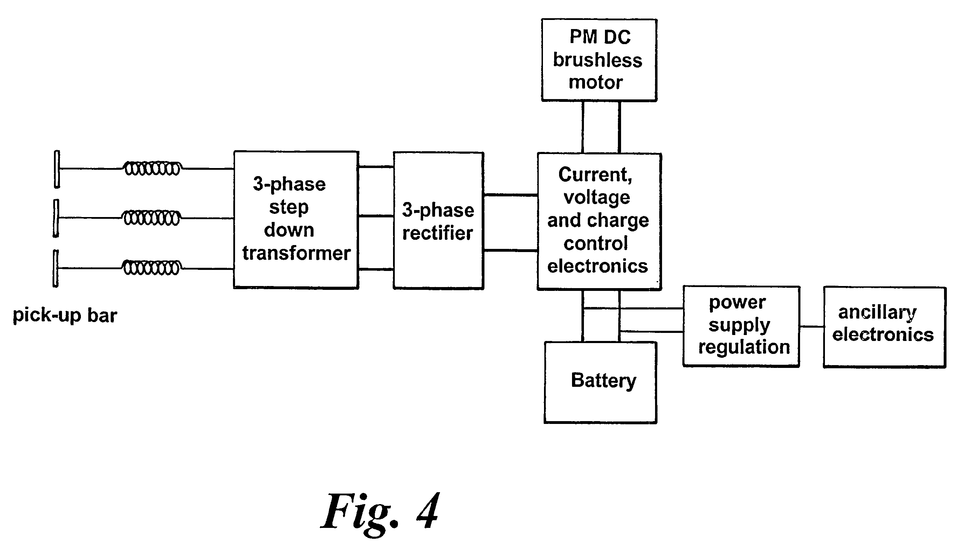

We turn now to Figure 4, which is a block diagram of the electrical power system used to power the apparatus 2.

Power at 11KV rms is picked up by the pantograph 20 and fed to the primary of a three phase step-down transformer and then rectified. While power is being drawn from the overhead lines 16, 16', 16'', it is fed directly to the motor which drives the rotor blades 6, 8. A rare-earth permanent magnet D.C. brushless motor gives a high power density, typically of the order of 1KW/Kg. The rotor blades 6, 8 are maintained at a fixed speed by regulation of the voltage and current to the motor. Charge control electronics regulates current to the battery. The power electronics used here is similar to that developed for the current generation of electrically driven automobiles. When contact with the overhead lines 16, 16', 16'' is broken, power for the motor is drawn from the battery. The battery supplies on-board ancillary electronics at all times.

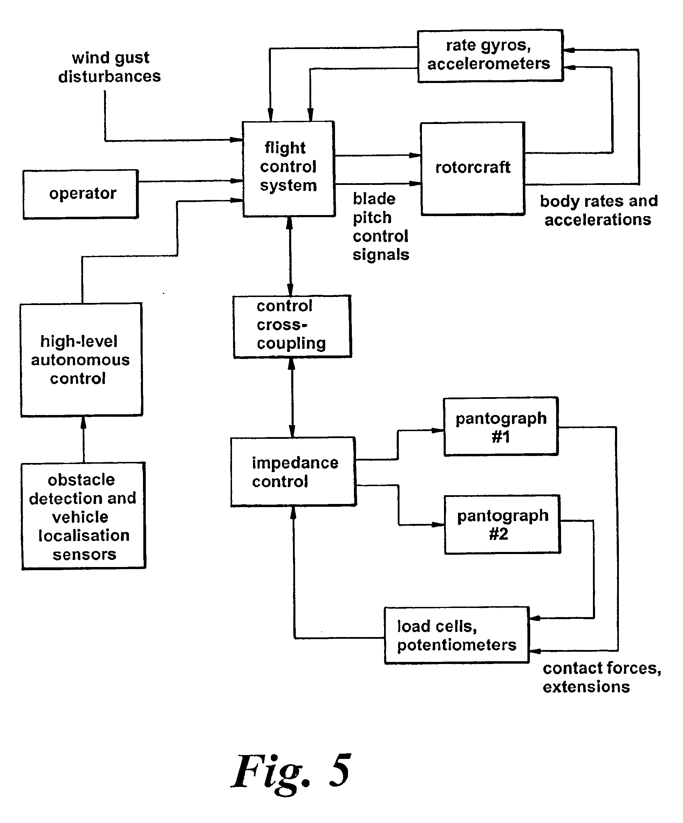

The apparatus control system, in two parts, is shown as a block diagram in Figure 5. The upper part is the flight control system. Rate gyros (e.g. those manufactured by Humphrey Operations for UAVs) and accelerometers (e.g. supplied by Analog Devices) are used to sense the motion of the apparatus 2. The flight control system (e.g. GuideStar GS0111 by Athena Technologies) uses these signals to vary the cyclic and collective pitch of the rotor blades 6, 8 to regulate against unwanted disturbances, typically from wind gusts. The flight control system also receives demand signals from the operator with respect to mode of operation, direction and speed of flight, height etc and translates these into appropriate controls for the rotor blades 6, 8.

The lower part of Figure 5 deals with the pantograph 20 control, which again works in a feedback mode. A load cell 28 and potentiometer (or encoder) are used to measure the contact forces and extensions of the pantograph and any errors from the demanded values are used to drive the pantograph actuators so as to maintain the contact to the overhead lines 16, 16' 16''. The control system feedback law is based on 'impedance control', as developed in the field of robotic manipulators where picking up and handling fragile objects requires simultaneous control of position and force.

The quality of both control systems is improved by means of cross-coupling so that the flight control system is aware of the distance of the apparatus 2 from the overhead lines 16, 16', 16'' and, in reciprocal fashion, the impedance controller is aware of the pose (i.e. the orientation and position) of the apparatus 2. On operator command, another control mode is entered where the actuators cause the pantograph to retract while manoeuvring around obstacles or changing to a branch line (such as the branch lines 42 shown in Figure 3). There is also provision for the system to detect obstacles on the flight path and to localize the apparatus 2 with respect to the overhead line so that an alternative path may be computed, which allows it to manoeuvre around obstacles autonomously or with the minimum of operator intervention. This system comprises ultrasonic sensors and/or millimetre wave radar for range-finding and video imaging with feature detection and tracking.

The battery has sufficient power, or can recharge on the power lines 14 to perform multiply remote locomotion procedures on a given stretch of the power line system 14, such that the apparatus 2 may be arranged to remotely traverse multiple spaced apart obstacles on the power lines 16, 16' and 16''.

The surveillance cameras 12 may be used during remote locomotion of the apparatus 2 as an apparatus orientation means, in order for an operator to determine the position, direction etc of the apparatus 2 when remote from the power lines 16, 16' and 16''.

Alternatively or additionally the apparatus 2 may comprise further apparatus orientation means such as monitors, detectors or cameras which are autonomous or operator controlled, in which may be placed anywhere on the apparatus 2 in order to determine movement, direction and the like parameters when remote from the power lines and or when located on the power lines.

When the apparatus returns to the power lines after traversing an obstacle, the pantograph 20 is actuated to recommence drawing up of power from the power lines 16, 16'and 16", which can recharge the re-chargeable battery (not shown) in order for subsequent remote locomotion of the apparatus.

Preferably the battery or any other power source present within the apparatus body 4 has enough power to enable traversal of obstacles on the power lines 16, 16' and 16'', but not enough power to allow the apparatus 2 to travel above a pre-determined altitude, for example 80 metres from ground level or less, and thus functions as an altitude limiting means.

This safety fall back enables the apparatus to be used in regions and jurisdictions in which regulations are in place controlling unmanned or manned vehicles and aircraft.

We turn to Figure 3 which illustrates part of a power line system 14 which includes a main three phase power line set up 40, and perpendicular to the main power lines 40 a branch three phase power line system 42, at a lower altitude. The power lines 40 include obstacles in the form of insulators 41, and the power lines 42 also include obstacles in the form of insulators 43. The apparatus 2 of the preferred embodiment of the invention is suitable for traversing both the power line 40 and the obstacles as described herein and above, but also is suitable for remote travel between the power lines 40 and the power lines 42 such that the branch line 42 may be inspected in the same inspection period as the main lines 40. The apparatus 2 may travel along either the branch lines 42 or main lines 40 and be activated to remotely travel to the other of the main lines 40 or branch lines 42 by remote flight as described hereinabove and with suitable control of direction by the operator of the apparatus 2.

When it is desired to stop monitoring of the power line system 14, the apparatus is actuated to terminate power drawn from the power lines 16, 16' and 16" as described above, and the apparatus is then effected to undergo remote locomotion from the power lines down to ground level by suitable input of signals transmitted by the remote user.

## Claims

1. A power line inspection apparatus (2) comprising a vehicle body (4) to which is mounted a power line traversal means (6, 8), a power line inspection means (12) and means (20) to draw power from a power line (16, 16', 16'') to which it is attached, in use; **characterised in that** the means to draw power from the power line comprises an ohmic contact means; and wherein the apparatus further comprises remote travel means (6, 8) which comprises means able to effect hovering or flight of the apparatus above a power line.

2. A power line inspection apparatus as claimed in claim 1 wherein the power line traversal means (6, 8) comprise a locomotion means (6, 8) arranged in use to effect locomotion of the apparatus on or in the region of the power lines (16, 16', 16") to which it is attached, in use.

3. A power line inspection apparatus (2) as claimed in claim 1 or 2 wherein the locomotion means (6, 8) comprises at least one rotor (6, 8).

4. A power line inspection apparatus (2) as claimed in claim 3 comprising at least two contra-rotating rotors (6, 8).

5. A power line inspection apparatus (2) as claimed in claim 4 wherein the contra-rotating rotors (6, 8) are superposed.

6. A power line inspection apparatus (2) as claimed in claim 4 or 5 wherein the contra-rotating rotors (6, 8) are in a ducted fan or shrouded fan configuration.

7. A power line inspection apparatus (2) as claimed in any preceding claim wherein the power line inspection means (12) comprises a camera (12).

8. A power line inspection apparatus (2) as claimed in any preceding claim wherein the power line inspection means (12) comprises one or more power line characteristic sensors.

9. A power line inspection apparatus (2) as claimed in claim 8 wherein the or each power line characteristic sensor is selected from the group consisting of a current sensor, a voltage sensor, a power line dimension sensor, a power line topology sensor, a thermal sensor, and a corona discharge sensor.

10. A power line inspection apparatus as claimed in any preceding claim wherein the ohmic contact means (20) comprises a pantograph (20).

11. A power line inspection apparatus (2) as claimed in claim 10 wherein the pantograph (20) comprises means (20, 30) to bias the pantograph onto the or each power line (16, 16', 16''), when the apparatus is mounted to the or each power line.

12. A power line inspection apparatus (2) as claimed in claim 11 wherein the biasing means (20, 30) comprises a resilient biasing means.

13. A power line inspection apparatus (2) as claimed in claim 12 wherein the biasing means (20, 30) comprises an actuator (30) or servo, comprising force and position transducers which monitor the force and position of the pantograph actuator or servo and effects adjustment of the pantograph (20) in response.

14. A power line inspection apparatus (2) as claimed in any preceding claim further comprising means (6, 8) to circumnavigate obstacles on or in the region of the power lines, in use.

15. A power line inspection apparatus (2) as claimed in any preceding claim wherein the remote travel means (6, 8) comprises the power line locomotion means.

16. A power line inspection apparatus (2) as claimed in any preceding claim wherein the apparatus comprises means to effect cessation of power take-up from a power line (16, 16', 16'').

17. A power line inspection apparatus (2) as claimed in any preceding claim further comprising a power storage means.

18. A power line inspection apparatus (2) as claimed in claim 17 wherein the power storage means comprises a power cell or battery.

19. A power line inspection apparatus (2) as claimed in claim 18 wherein the power cell or battery comprises means to recharge via uptake from a power line (16, 16', 16'') to which the apparatus is attached, in use.

20. A power line inspection apparatus (2) as claimed in any preceding claim further comprising a path obstacle sensor (12), arranged in use to detect obstacles in the path of the apparatus, on or in the vicinity of a power line (16, 16', 16'').

21. A power line inspection apparatus (2) as claimed in any preceding claim further comprising an apparatus orientation means (12), which comprises means for the apparatus to detect its orientation with respect to a power line (16, 16', 16'').

22. A power line inspection apparatus (2) as claimed in any preceding claim further comprising movement adjustment means (6, 8), arranged in use to adjust the movement of the apparatus when an obstacle is detected on the power line (16, 16', 16'') in the vicinity of the apparatus.

23. A power line inspection apparatus (2) as claimed in any preceding claim further comprising altitude limiting means, arranged in use to limit the altitude to which the apparatus can ascend remote from the or each power line (16, 16', 16") which it is designed to inspect.

## Patentansprüche

1. Hochspannungsleitungs-Inspektionsvorrichtung (2), umfassend einen Fahrzeugkörper (4), an den angebracht sind: eine Hochspannungsleitungs-Traversiereinrichtung (6, 8), eine Hochspannungsleitungs-Inspektionseinrichtung (12) und eine Einrichtung (20) zum Aufnehmen von Spannung aus einer Hochspannungsleitung (16, 16', 16"), an der sie im Einsatz befestigt ist, und
**dadurch gekennzeichnet, dass** die Einrichtung zum Aufnehmen von Spannung aus der Hochspannungsleitung eine Ohm'sche Kontakteinrichtung umfasst,
wobei die Vorrichtung des Weiteren eine entfernt liegende Fahreinrichtung (6, 8) umfasst, die Einrichtungen umfasst, die in der Lage sind, Schweben oder Fliegen der Vorrichtung über eine Hochspannungsleitung herbeizuführen.

2. Hochspannungsleitungs-Inspektionsvorrichtung nach Anspruch 1, wobei die Hochspannungsleitungs-Traversiereinrichtung (6, 8) eine Fortbewegungseinrichtung (6, 8) umfasst, die in Betrieb eingerichtet ist, um Fortbewegung der Vorrichtung an oder in dem Bereich der Hochspannungsleitungen (16, 16', 16"), an denen sie im Einsatz angebracht ist, herbeizuführen.

3. Hochspannungsleitungs-Inspektionsvorrichtung (2) nach Anspruch 1 oder 2,
wobei die Fortbewegungseinrichtung (6, 8) wenigstens einen Rotor (6, 8) umfasst.

4. Hochspannungsleitungs-Inspektionsvorrichtung (2) nach Anspruch 3, die wenigstens zwei gegendrehende Rotoren (6, 8) umfasst.

5. Hochspannungsleitungs-Inspektionsvorrichtung (2) nach Anspruch 4, wobei die gegendrehenden Rotoren (6, 8) übereinanderliegend sind.

6. Hochspannungsleitungs-Inspektionsvorrichtung (2) nach Anspruch 4 oder 5,
wobei die gegendrehenden Rotoren (6, 8) in einer Bypass- oder Ummantelungskonfiguration sind.

7. Hochspannungsleitungs-Inspektionsvorrichtung (2) nach einem der vorhergehenden Ansprüche, wobei die Hochspannungsleitungs-Inspektionsvorrichtung (12) eine Kamera (12) umfasst.

8. Hochspannungsleitungs-Inspektionsvorrichtung (2) nach einem der vorhergehenden Ansprüche, wobei die Hochspannungsleitungs-Inspektionsvorrichtung (12) einen oder mehrere Hochspannungsleitungs-Kennliniensensoren umfasst.

9. Hochspannungsleitungs-Inspektionsvorrichtung (2) nach Anspruch 8, wobei der oder jeder Hochspannungsleitungs-Kennliniensensor aus der Gruppe ausgewählt wird, die aus einem Stromsensor, einem Spannungssensor, einem Hochspannungsleitungs-Längensensor, einem Hochspannungsleitungs-Topologiesensor, einem Wärmesensor und einem Koronaentladungssensor besteht.

10. Hochspannungsleitungs-Inspektionsvorrichtung nach einem der vorhergehenden Ansprüche, wobei die Ohm'sche Kontakteinrichtung (20) einen Stromabnehmer (20) umfasst.

11. Hochspannungsleitungs-Inspektionsvorrichtung (2) nach Anspruch 10, wobei der Stromabnehmer (20) eine Einrichtung (20, 30) zum Vorspannen des Stromabnehmers an der oder jeder Hochspannungsleitung (16, 16', 16"), wenn die Vorrichtung an der oder jeder Hochspannungsleitung angebracht ist, umfasst.

12. Hochspannungsleitungs-Inspektionsvorrichtung (2) nach Anspruch 11, wobei die Vorspanneinrichtung (20, 30) eine elastische Vorspanneinrichtung umfasst.

13. Hochspannungsleitungs-Inspektionsvorrichtung (2) nach Anspruch 12, wobei die Vorspanneinrichtung (20, 30) einen Aktor (30) oder eine Servoeinrichtung umfasst, der bzw. die Kraft- und Positionswandler einschließt, die die Kraft und die Postition des Stromabnehmeraktors oder der Stromabnehmer-Servoreinrichtung überwachen und in Reaktion darauf Einstellung des Stromabnehmers (20) herbeiführen.

14. Hochspannungsleitungs-Inspektionsvorrichtung (2) nach einem der vorhergehenden Ansprüche, die des Weiteren eine Einrichtung (6, 8) zum Umgehen von Hindernissen an oder in dem Bereich der Hochspannungsleitungen in Betrieb umfasst.

15. Hochspannungsleitungs-Inspektionsvorrichtung (2) nach einem der vorhergehenden Ansprüche, wobei die entfernt liegende Fahreinrichtung (6, 8) die Hochspannungsleitungs-Fortbewegungseinrichtung umfasst.

16. Hochspannungsleitungs-Inspektionsvorrichtung (2) nach einem der vorhergehenden Ansprüche, wobei die Vorrichtung eine Einrichtung zum Herbeiführen des Einstellen der Stromabnahme von einer Hochspannungsleitung (16, 16', 16") umfasst.

17. Hochspannungsleitungs-Inspektionsvorrichtung (2) nach einem der vorhergehenden Ansprüche, die des Weiteren eine Stromspeichereinrichtung umfasst.

18. Hochspannungsleitungs-Inspektionsvorrichtung (2) nach Anspruch 17, wobei die Stromspeichereinrichtung eine Stromzelle oder eine Batterie umfasst.

19. Hochspannungsleitungs-Inspektionsvorrichtung (2) nach Anspruch 18, wobei in Betrieb die Stromzelle oder die Batterie eine Einrichtung zum Aufladen über Abnahme von einer Hochspannungsleitung (16, 16', 16"), an der die Vorrichtung angebracht ist, umfasst.

20. Hochspannungsleitungs-Inspektionsvorrichtung (2) nach einem der vorhergehenden Ansprüche, die des Weiteren einen Weghindernis-Sensor (12) umfasst, der eingereichtet ist, um in Betrieb Hindernisse auf dem Weg der Vorrichtung an oder in der Nähe einer Hochspannungsleitung (16, 16', 16") zu erkennen.

21. Hochspannungsleitungs-Inspektionsvorrichtung (2) nach einem der vorhergehenden Ansprüche, die des Weiteren eine Vorrichtungs-Ausrichtungseinrichtung (12) umfasst, die Einrichtungen für die Vorrichtung einschließt, um ihre Ausrichtung in Bezug auf eine Hochspannungsleitung (16, 16', 16") zu erkennen.

22. Hochspannungsleitungs-Inspektionsvorrichtung (2) nach einem der vorhergehenden Ansprüche, die des Weiteren eine Bewegung-Anpassungseinrichtung (6, 8) umfasst, die eingereichtet ist, um in Betrieb die Bewegung der Vorrichtung anzupassen, wenn an der Hochspannungsleitung (16, 16', 16") in der Nähe der Vorrichtung ein Hindernis erkannt ist.

23. Hochspannungsleitungs-Inspektionsvorrichtung (2) nach einem der vorhergehenden Ansprüche, die des Weiteren eine Höhenbegrenzungseinrichtung umfasst, die eingerichtet ist, um in Betrieb die Höhe zu begrenzen, auf die die Vorrichtung entfernt von der oder jeder Hochspannungsleitung (16, 16', 16"), die zur Inspektion bestimmt ist, aufsteigen kann.

## Revendications

1. Appareil d'inspection de lignes de courant (2) comprenant un corps de véhicule (4) sur lequel est monté un moyen de traversée de lignes de courant (6, 8), un moyen d'inspection de lignes de courant (12) et un moyen (20) pour tirer du courant d'une ligne de courant (16, 16', 16'') à laquelle il est fixé en service ; **caractérisé en ce que** le moyen pour tirer du courant de la ligne de courant comprend un moyen de contact ohmique ; et dans lequel l'appareil comprend en outre un moyen de déplacement à distance (6, 8) qui comprend un moyen capable de faire flotter ou voler l'appareil au-dessus d'une ligne de courant.

2. Appareil d'inspection de lignes de courant selon la revendication 1, dans lequel les moyens de traversée de lignes de courant (6, 8) comprennent un moyen de locomotion (6, 8) aménagé en service pour assurer la locomotion de l'appareil sur sur ou dans la région des lignes de courant (16, 16', 16'') auxquelles il est fixé en service.

3. Appareil d'inspection de lignes de courant (2) selon la revendication 1 ou 2, dans lequel le moyen de locomotion (6, 8) comprend au moins un rotor (6, 8).

4. Appareil d'inspection de lignes de courant (2) selon la revendication 3, comprenant au moins deux rotors contrarotatifs (6, 8).

5. Appareil d'inspection de lignes de courant (2) selon la revendication 4, dans lequel les rotors contrarotatifs (6, 8) sont superposés.

6. Appareil d'inspection de lignes de courant (2) selon la revendication 4 ou 5, dans lequel les rotors contrarotatifs (6, 8) se trouvent dans une configuration de soufflante carénée ou de soufflante blindée.

7. Appareil d'inspection de lignes de courant (2) selon l'une quelconque des revendications précédentes, dans lequel le moyen d'inspection de lignes de courant (12) comprend une caméra (12).

8. Appareil d'inspection de lignes de courant (2) selon l'une quelconque des revendications précédentes, dans lequel le moyen d'inspection de lignes de courant (12) comprend un ou plusieurs capteurs caractéristiques de lignes de courant.

9. Appareil d'inspection de lignes de courant (2) selon la revendication 8, dans lequel le ou chaque capteur caractéristique de ligne de courant est choisi dans le groupe constitué d'un capteur de courant, d'un capteur de tension, d'un capteur de dimension de ligne de courant, d'un capteur de topologie de ligne de courant, d'un capteur thermique et d'un capteur de décharge corona.

10. Appareil d'inspection de lignes de courant selon l'une quelconque des revendications précédentes, dans lequel le moyen de contact ohmique (20) comprend un pantographe (20).

11. Appareil d'inspection de lignes de courant (2), selon la revendication 10, dans lequel le pantographe (20) comprend des moyens (20, 30) pour presser le pantographe sur la ou chaque ligne de courant (16, 16', 16''), lorsque l'appareil est monté sur la ou chaque ligne de courant.

12. Appareil d'inspection de lignes de courant (2) selon la revendication 11, dans lequel le moyen de pression (20, 30) comprend un moyen de pression élastique.

13. Appareil d'inspection de lignes de courant (2), selon la revendication 12, dans lequel le moyen de pression (20, 30) comprend un dispositif d'actionnement (30) ou un dispositif asservi, comprenant des transducteurs de force et de position qui contrôlent la force et la position du dispositif d'actionnement du pantographe ou du dispositif asservi et effectue un ajustement du pantographe (20) en réponse.

14. Appareil d'inspection de lignes de courant (2), selon l'une quelconque des revendications précédentes, comprenant en outre des moyens (6, 8) pour contourner les obstacles sur ou dans la région des lignes de courant en service.

15. Appareil d'inspection de lignes de courant (2) selon l'une quelconque des revendications précédentes, dans lequel le moyen de déplacement à distance (6, 8) comprend les moyens de locomotion de la ligne de courant.

16. Appareil d'inspection de lignes de courant (2) selon l'une quelconque des revendications précédentes, dans lequel l'appareil comprend des moyens pour mettre fin à la prise de courant d'une ligne de courant (16, 16', 16").

17. Appareil d'inspection de lignes de courant (2) selon l'une quelconque des revendications précédentes, comprenant en outre un moyen de stockage de courant.

18. Appareil d'inspection de lignes de courant (2) selon la revendication 17, dans lequel le moyen de stockage de courant comprend une pile ou une batterie électrique.

19. Appareil d'inspection de lignes de courant (2) selon la revendication 18, dans lequel la pile ou la batterie électrique comprend des moyens de recharge par prise d'une ligne de courant (16, 16', 16'') à laquelle l'appareil est fixé en service.

20. Appareil d'inspection de lignes de courant (2) selon l'une quelconque des revendications précédentes, comprenant en outre un capteur d'obstacle de trajet (12), aménagé en utilisation pour détecter des obstacles dans le trajet de l'appareil sur ou dans le voisinage de la ligne de courant (16, 16', 16'').

21. Appareil d'inspection de lignes de courant (2) selon l'une quelconque des revendications précédentes, comprenant en outre un moyen d'orientation d'appareil (12) qui comprend des moyens pour que l'appareil détecte son orientation par rapport à une ligne de courant (16, 16', 16'').

22. Appareil d'inspection de lignes de courant (2), selon l'une quelconque des revendications précédentes, comprenant en outre des moyens d'ajustement de mouvement (6, 8), aménagés en service pour ajuster le mouvement de l'appareil lorsqu'un obstacle est détecté sur la ligne de courant (16, 16', 16'') à proximité de l'appareil.

23. Appareil d'inspection de lignes de courant (2) selon l'une quelconque des revendications précédentes, comprenant en outre des moyens limitant la hauteur aménagés en service pour limiter la hauteur à laquelle l'appareil peut s'élever par rapport à la ou chaque ligne de courant (16, 16', 16'') qui doit être inspectée.
